# FASCICULE DE BREVET EUROPEEN

(11) **EP 2 925 591 B1**
(45) Date de publication et mention de la délivrance du brevet: **24.05.2017**
(21) Numéro de dépôt: 13792284.5
(22) Date de dépôt: 05.11.2013
(51) Int. Cl.: B62D 25/16

(54) **STRUCTURE DE FIXATION D'UNE AILE AVANT D'UN VÉHICULE AUTOMOBILE ET VÉHICULE AUTOMOBILE ASSOCIÉ**
AUFBAUSTRUKTUR FÜR DEN KOTFLÜGEL EINES KRAFTFAHRZEUGS UND KRAFTFAHRZEUG MIT EINER SOLCHEN AUFBAUSTRUKTUR
SUPPORT STRUCUTRE FOR A FRONT WING OF A CAR AND CAR WITH SUCH A SUPPORT STRUCTURE

(30) Priorité: 27.11.2012 FR 1261278
(43) Date de publication de la demande: 07.10.2015
(73) Titulaire: Renault S.A.S., 92100 Boulogne-Billancourt (FR)
(72) Inventeur: MACEASA, Stela, R-110356 Pitesti (RO); BURTUMAC, Gheorghe-Valentin, R-110356 Pitesti (RO); DICU, George, Bucuresti (RO)
(86) Numéro de dépôt international: PCT/EP2013/073050
(87) Numéro de publication internationale: WO 2014/082819

(56) Documents cités:
- EP-A2- 1 403 175
- WO-A2-2004/067322
- FR-A1- 2 922 181

## Description

### Domaine technique de l'invention

L'invention concerne les moyens de fixation d'une aile avant d'un véhicule automobile, qui permettent de répondre aux normes de sécurité, notamment en ce qui concerne les chocs dits « piétons ».

L'invention concerne plus particulièrement une structure de fixation d'une aile avant d'un véhicule automobile comportant des éléments rigides de carrosserie sur lesquels vient se fixer ladite aile avant, lesdits éléments de carrosserie comportant :
- un renfort s'étendant vers l'avant du véhicule et comportant un bord supérieur s'étendant sensiblement parallèlement à un bord supérieur de l'aile avant, lequel est prolongé vers le bas par une bordure, de sorte que la partie supérieure de l'aile avant présente une section transversale sensiblement en U, ladite bordure étant espacée du bord supérieur du renfort,
- un élément de support, fermant l'espace ainsi défini, fixé à la bordure de l'aile avant, par une première face sensiblement verticale, et audit bord supérieur du renfort, par une seconde face sensiblement horizontale, de sorte que l'élément de support présente une section transversale en L, ledit élément de support comportant des moyens de rigidification garantissant la raideur de l'aile avant et des moyens de rigidification additionnels, agencés sur ladite face sensiblement horizontale de l'élément de support, de sorte à rigidifier transversalement l'aile avant sans empêcher sa déformation, en cas de choc dit « choc piéton ».

L'invention concerne également un véhicule automobile comportant une telle structure de fixation pour chacune de ses ailes avant.

### Etat de la technique

Les normes de sécurité actuelles concernant les chocs dits « piétons » imposent que la structure de l'avant des véhicules doit être conçue de telle sorte qu'en cas de choc contre un piéton à faible vitesse du véhicule, ce piéton ne doit pas subir de blessures graves. Le bouclier avant, ainsi que les ailes avant, sont principalement concernés par les normes ci-dessus.

Afin de répondre à ces normes de sécurité, il existe de nombreuses solutions touchant plus particulièrement la structure de fixation d'une aile avant. Un premier exemple consiste à utiliser des supports de fixation en plastique, mais leur prix de revient est beaucoup trop important, tout en ne garantissant pas forcément un comportement optimal en cas de chocs.

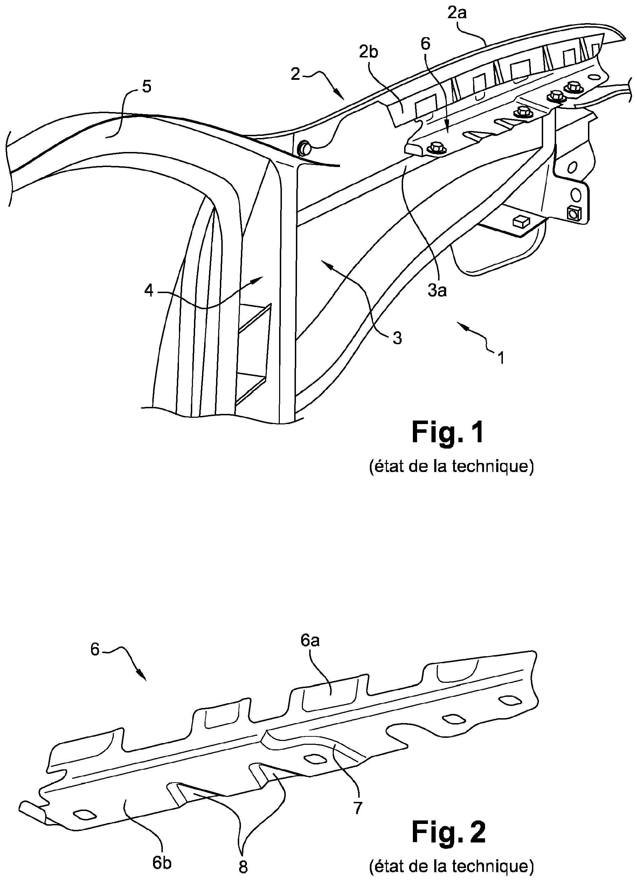

D'autres solutions, avec des supports de fixation métalliques, comme décrit notamment dans le document EP 1 403 175 qui dévoile le préambule de la revendication 1 et le brevet FR 2 922 181 de la Demanderesse, ont été développées pour permettre d'atteindre le cahier des charges demandé. Plus particulièrement, comme représenté sur la figure 1, une structure 1 de fixation d'une aile avant 2 d'un véhicule automobile (non représenté entièrement sur les figures pour des raisons de clarté) comporte classiquement des éléments rigides de carrosserie sur lesquels vient se fixer l'aile avant 2. Plus particulièrement, ces éléments de carrosserie comportent une traverse (non représentée) s'étendant à l'arrière du compartiment moteur du véhicule près du pare-brise et une plaque en tôle, ou renfort de doublure de pied avant 3, fixée au niveau de cette traverse à un pied de structure 4, à partir duquel s'étend un montant 5 pour le pare-brise, au-dessus de la traverse.

Le renfort 3 s'étend vers l'avant du véhicule et comporte un bord supérieur 3a s'étendant sensiblement parallèlement à un bord supérieur 2a de l'aile avant 2, lequel est prolongé vers le bas par une bordure 2b, de sorte que la partie supérieure de l'aile 2 présente une section transversale sensiblement en U, la bordure 2b étant ainsi espacée du bord supérieur 3a du renfort 3. L'espace ainsi défini est fermé par un élément de support 6, fixé à la bordure 2b de l'aile avant 2, par une première face 6a sensiblement verticale (figure 2), et audit bord supérieur 3a du renfort 3, par une seconde face 6b sensiblement horizontale (figure 2). C'est cet élément de support 6 qui comporte une épaisseur suffisamment grande pour tenir l'aile avant 2 et suffisamment faible pour que l'élément puisse se déformer, lorsqu'un choc du type « choc piéton » est appliqué sur l'avant du véhicule.

Plus particulièrement, comme représenté sur la figure 2, l'élément de support 6 comporte classiquement une section transversale sensiblement en L, avec ladite première face 6a sensiblement verticale coopérant avec la bordure 2b de l'aile avant 2 et ladite seconde face 6b sensiblement horizontale destinée à coopérer avec le renfort 3, plus particulièrement avec le bord supérieur 3a du renfort 3. L'élément de support 6 comporte classiquement un premier embouti 7 et deux conformations 8 de forme triangulaire, jouant le rôle de moyens de raidisseur de l'élément de support 6 assurant la rigidité transversale de l'aile avant 2. L'élément de support comporte également des moyens de rigidification additionnels, agencés sur la face sensiblement horizontale de l'élément de support, de sorte à rigidifier transversalement l'aile avant sans empêcher sa déformation, en cas de choc dit « choc piéton ».

Toutefois, une telle structure de fixation semble répondre au cahier des charges en termes de résistance aux chocs piétons, mais cela au détriment de la raideur de l'aile transversalement qui est fortement dégradée. Une telle solution s'avère donc insuffisante pour permettre à la fois de répondre parfaitement au cahier des charges « chocs piéton », c'est-à-dire en autorisant la déformation de l'aile avant et donc de l'élément de support associé, tout en assurant la rigidité, notamment transversalement, de l'aile avant.

### Objet de l'invention

L'invention a pour but de remédier à l'ensemble des inconvénients précités et a pour objet la réalisation d'une structure de fixation d'une aile avant d'un véhicule automobile qui soit simple de conception et de mise en oeuvre, tout en évitant une re-conception complète de l'architecture de l'avant du véhicule.

Cet objet de l'invention est caractérisé, plus particulièrement, en ce que lesdits moyens de rigidification additionnels de l'élément de support comportent :
- une première conformation, par exemple du type communément appelé « bulldozer », agencée à la jonction entre ladite face sensiblement verticale et ladite face sensiblement horizontale et dans une zone sensiblement avant de l'élément de support,
- deux nervures transversales, agencées sur toute la largeur de ladite face sensiblement horizontale de l'élément de support et dans une zone sensiblement centrale de l'élément de support,
- une seconde conformation de forme triangulaire, agencée sur ladite face sensiblement horizontale de l'élément de support et entre lesdites deux nervures transversales de l'élément de support.

Un tel élément de support permet ainsi de ne pas interférer sur le fonctionnement en choc, c'est-à-dire la déformation, ou l'enfoncement, de l'aile avant et donc de l'élément de support, en cas de chocs dits « piétons ».

D'autres avantages et caractéristiques de l'invention peuvent être considérés isolément ou en combinaison :
- L'élément de support peut comporter une portion de bord avant, sur sa face sensiblement verticale, apte à recevoir un point de soudure.
- L'élément de support peut être métallique et peut comporter une épaisseur de l'ordre de 0,75mm.

L'invention a également pour objet un véhicule automobile dont le comportement de ses ailes avant en cas de chocs dits « piétons » peut répondre aux différentes normes en vigueur.

Cet objet de l'invention est caractérisé, plus particulièrement, en ce que le véhicule automobile comporte une telle structure de fixation pour chacune de ses ailes avant.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
La figure 1 représente une vue en perspective d'une structure de fixation d'une aile avant d'un véhicule automobile selon l'art antérieur.
La figure 2 représente un élément de support appartenant à la structure de fixation d'une aile avant selon la figure 1.
La figure 3 représente une vue en perspective d'une structure de fixation d'une aile avant d'un véhicule automobile selon l'invention.
La figure 4 représente un élément de support appartenant à la structure de fixation d'une aile avant selon la figure 3.

### Description de modes particuliers de réalisation

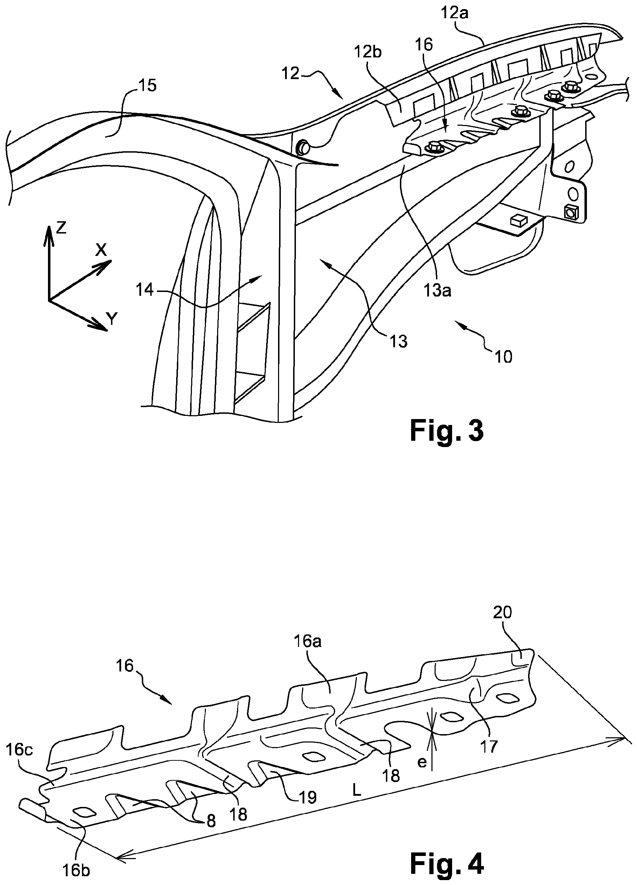

Dans la description qui va suivre, des éléments identiques ou analogues porteront les mêmes chiffres et nombres de référence. Les expressions telles que « arrière » et « avant », « gauche » et « droite », « supérieur » et « inférieur » et les orientations « longitudinale », « transversale » et « verticale » seront définies en référence au trièdre X, Y, Z représenté sur la figure 3 et aux définitions données dans la description. Notamment, la direction longitudinale X correspond au sens de déplacement en marche avant d'un véhicule automobile (non représenté sur les figures pour des raisons de clarté).

En référence aux figures 3 et 4, la structure de fixation 10 selon l'invention d'une aile avant 12 d'un véhicule automobile comporte un élément de support 16 équipé de moyens de rigidification additionnels (par rapport aux moyens de rigidification déjà présents sur l'élément de support 6 de l'état de la technique) répartis judicieusement pour autoriser la déformation de l'aile avant 12, tout en garantissant la raideur optimale de l'aile avant 12, nécessaire au cahier des charges appliqué pour les chocs dits « piétons ».

Sur la figure 3, la structure de fixation 10 de l'aile avant 12 d'un véhicule automobile (non représenté entièrement sur les figures pour des raisons de clarté) comporte des éléments rigides de carrosserie sur lesquels vient se fixer l'aile avant 12. Plus particulièrement, ces éléments de carrosserie comportent un renfort de doublure de pied avant 13, fixé au niveau d'une traverse (non représentée) à un pied de structure 14, à partir duquel s'étend un montant 15 pour un pare-brise du véhicule.

Le renfort 13 s'étend vers l'avant du véhicule et comporte un bord supérieur 13a s'étendant sensiblement parallèlement à un bord supérieur 12a de l'aile avant 12, lequel est prolongé vers le bas par une bordure 12b, de sorte que la partie supérieure de l'aile 12 présente une section transversale sensiblement en U, la bordure 12b étant ainsi espacée du bord supérieur 13a du renfort 13. L'espace ainsi défini est fermé par l'élément de support 16, fixé à la bordure 12b de l'aile avant 12, par une première face 16a sensiblement verticale, et audit bord supérieur 13a du renfort 13, par une seconde face 16b sensiblement horizontale.

Comme représenté plus particulièrement sur la figure 4, l'élément de support 16 comporte une section transversale sensiblement en L, avec ladite première face 16a sensiblement verticale coopérant avec la bordure 12b de l'aile avant 12 et ladite seconde face 16b sensiblement horizontale destinée à coopérer avec le renfort 13, plus particulièrement avec le bord supérieur 13a du renfort 13. L'élément de support 16 de la structure de fixation 10 selon l'invention comporte classiquement les deux emboutis, ou conformations 8, de forme triangulaire, jouant le rôle de moyens de raidisseur de l'élément de support 16, comme pour l'élément de support 6, représenté sur la figure 2, selon l'état de la technique. Par ailleurs, l'élément de support 16 est, de préférence, métallique et comporte une épaisseur e de l'ordre de 0,75mm.

Selon l'invention, l'élément de support 16 comporte également une conformation 17, par exemple du type « bulldozer », c'est-à-dire présentant sensiblement la forme d'une bosse au niveau d'une arête de la pièce. Plus particulièrement, la conformation 17 « bulldozer » est agencée au niveau d'une arête 16c, de préférence sensiblement arrondie, joignant les deux faces 16a verticale et 16b horizontale de l'élément de support 16, et sensiblement dans une zone vers l'avant de l'élément de support 16 (figure 4). Une telle conformation 17 « bulldozer » joue ainsi le rôle, d'une part, de raidisseur pour l'élément de support 16 et, d'autre part, d'amorce de déformation de l'élément de support 16 en cas de choc dit « piéton » contre l'aile avant 12.

De même, l'élément de support 16 de la structure de fixation 10 selon l'invention comporte également deux nervures 18 transversales, jouant le rôle de moyens de rigidification additionnels, agencées sur toute la largeur de la face 16b sensiblement horizontale de l'élément de support 16, à savoir du bord libre de la face 16b jusqu'à l'arête 16c, joignant les deux faces 16a verticale et 16b horizontale de l'élément de support 16. Les deux nervures 18 sont agencées, de préférence, dans une zone sensiblement centrale de l'élément de support 16, à savoir sensiblement au milieu de la longueur L de l'élément de support 16 (figure 4).

L'élément de support 16 de la structure de fixation 10 selon l'invention comporte également et avantageusement une conformation 19 supplémentaire de forme triangulaire, en plus des deux conformations 8 triangulaires, jouant le rôle d'un élément de raidissement supplémentaire pour l'élément de support 16. La conformation 19 supplémentaire de forme triangulaire est agencée sur la face 16b horizontale de l'élément de support 16 et, de préférence, entre les deux nervures 18 transversales (figure 4).

Ainsi, l'ensemble des conformations agencées précisément sur l'élément de support 16, à savoir la conformation 17 « bulldozer », les nervures 18 transversales et la conformation 19 triangulaire, ainsi que l'épaisseur e prédéterminée de l'élément de support 16, permettent ainsi à la structure de fixation 10 selon l'invention de garantir une rigidité optimale de l'aile avant 12, tout en autorisant sa juste déformation en cas de chocs dits « piétons ». Cela lui permet donc de répondre aux différentes normes en vigueur.

Par ailleurs, l'élément de support 16 de la structure de fixation 10 selon l'invention comporte également, sur sa face 16a sensiblement verticale, une portion 20 de bord avant, destinée à servir de surface de réception pour un point de soudure. Plus particulièrement, cette surface additionnelle, par rapport à l'élément de support 6 de l'état de la technique, permet d'offrir un point d'ancrage supplémentaire pour la fixation par points de soudure de l'élément de renfort 16 avec la bordure 12b de l'aile avant 12.

Ainsi, quel que soit le mode de réalisation de la structure de fixation 10 selon l'invention, celle-ci permet, notamment grâce à un tel élément de support 16, de garantir une bonne rigidité transversale de l'aile avant, nécessaire pour notamment la qualité perçue du véhicule, tout en étant compatible avec les exigences de raideur verticale imposées par les normes en vigueur concernant les chocs dits « piétons ».

L'invention n'est pas limitée aux différents modes de réalisation décrits ci-dessus. Notamment, la forme et les dimensions de l'élément de support 16 peuvent être différentes, tant que l'élément de support 16 avec ces moyens de rigidification additionnels restent dans les limites définies par les revendications et permettent d'assurer une rigidité de l'aile avant optimale sans empêcher sa déformation en cas de chocs dits « piétons ».

Par ailleurs, toujours dans les limites définies par les revendications, le nombre et la forme des moyens de rigidification additionnels peuvent être différents selon le type de véhicule automobile considéré et selon la structure de fixation associée pour les ailes avant.

L'invention s'applique plus particulièrement à tout type de véhicule automobile (quel que soit le type de véhicule ou le pays pour lequel il est destiné), dont la structure de fixation de chaque aile avant doit répondre aux différentes normes en vigueur concernant les chocs dits « piétons ».

## Revendications

1. Structure de fixation (10) d'une aile avant (12) d'un véhicule automobile comportant des éléments rigides de carrosserie sur lesquels vient se fixer ladite aile avant (12), lesdits éléments de carrosserie comportant :
- un renfort (13) s'étendant vers l'avant du véhicule et comportant un bord supérieur (13a) s'étendant sensiblement parallèlement à un bord supérieur (12a) de l'aile avant (12), lequel est prolongé vers le bas par une bordure (12b), de sorte que la partie supérieure de l'aile avant (12) présente une section transversale sensiblement en U, ladite bordure (12b) étant espacée du bord supérieur (13a) du renfort (13),
- un élément de support (16), fermant l'espace ainsi défini, fixé à la bordure (12b) de l'aile avant (12), par une première face (16a) sensiblement verticale, et audit bord supérieur (13a) du renfort (13), par une seconde face (16b) sensiblement horizontale, de sorte que l'élément de support (16) présente une section transversale en L, ledit élément de support (16) comportant des moyens de rigidification (7, 8) garantissant la raideur de l'aile avant et des moyens de rigidification additionnels (17, 18, 19), agencés sur ladite face (16b) sensiblement horizontale de l'élément de support (16), de sorte à rigidifier transversalement l'aile avant (12) sans empêcher sa déformation, en cas de choc dit « choc piéton »,
lesdits moyens de rigidification additionnels de l'élément de support (16) comportent :
- une première conformation (17), agencée à la jonction (16c) entre ladite face (16a) sensiblement verticale et ladite face (16b) sensiblement horizontale,
- deux nervures (18) transversales, agencées sur toute la largeur de ladite face (16b) sensiblement horizontale de l'élément de support (16) et dans une zone sensiblement centrale de l'élément de support (16), structure (10) **caractérisée en ce que** - la première conformation (17) est agencée dans une zone sensiblement avant de l'élément de support, et **en ce que**
- lesdits moyens de rigidification additionnels comportent une seconde conformation (19) de forme triangulaire, agencée sur ladite face (16b) sensiblement horizontale de l'élément de support (16) et entre lesdites deux nervures (18) transversales de l'élément de support (16).

2. Structure (10) selon la revendication précédente, **caractérisée en ce que** l'élément de support (16) comporte une portion (20) de bord avant, sur sa face (16a) sensiblement verticale, apte à recevoir un point de soudure.

3. Structure (10) selon l'une quelconque des revendications précédentes, caractérisée en que l'élément de support (16) est métallique.

4. Structure (10) selon l'une quelconque des revendications précédentes, caractérisée en que l'élément de support (16) comporte une épaisseur (e) de l'ordre de 0,75mm.

5. Véhicule automobile comportant au moins une aile avant (12), **caractérisé en ce qu'**il comporte une structure de fixation (10) de chaque aile avant (12) selon l'une quelconque des revendications précédentes.

## Patentansprüche

1. Aufbaustruktur (10) für den vorderen Kotflügel (12) eines Kraftfahrzeugs, umfassend starre Karosserieelemente, an denen der vordere Kotflügel (12) befestigt wird, wobei die Karosserieelemente umfassen:
- eine Verstärkung (13), die sich nach vorne zum Fahrzeug erstrecken und einen oberen Rand (13a) umfassen, der sich im Wesentlichen parallel zu einem oberen Rand (12a) des vorderen Kotflügels (12) erstreckt, welcher nach unten hin durch eine Umrandung (12b) verlängert ist, so dass der obere Teil des vorderen Kotflügels (12) einen im Wesentlichen U-förmigen Querschnitt aufweist, wobei die Umrandung (12b) zu dem oberen Rand (13a) der Verstärkung (13) beabstandet ist,
- ein Stützelement (16), das den so definierten Raum verschließt, das an der Umrandung (12b) des vorderen Kotflügels (12) mit einer ersten im Wesentlichen vertikalen Fläche (16a) und an dem oberen Rand (13a) der Verstärkung (13) mit einer zweiten im Wesentlichen horizontalen Fläche (16b) befestigt ist, so dass das Stützelement (16) einen L-förmigen Querschnitt aufweist, wobei das Stützelement (16) Versteifungsmittel (7, 8), die die Steifigkeit des vorderen Kotflügels gewährleisten, und zusätzliche Versteifungsmittel (17, 18, 19) umfasst, die auf der im Wesentlichen horizontalen Fläche (16b) des Stützelements (16) angeordnet sind, so dass der vordere Kotflügel (12) quer versteift wird, ohne seine Verformung im Fall eines Aufpralls, "Fußgängeraufprall" genannt, zu verhindern,
die zusätzlichen Versteifungsmittel des Stützelements (16) umfassen:
- einen ersten Aufbau (17), der an der Verbindung (16c) zwischen der im Wesentlichen vertikalen Fläche (16a) und der im Wesentlichen horizontalen Fläche (16b) angeordnet ist,
- zwei Querrippen (18), die auf der gesamten Breite der im Wesentlichen horizontalen Fläche (16b) des Stützelements (16) und ein einer im Wesentlichen zentralen Zone des Stützelements (16) angeordnet sind,
wobei die Struktur (10) **dadurch gekennzeichnet ist, dass**:
- der erste Aufbau (17) in einer im Wesentlichen vorderen Zone des Stützelements angeordnet ist, und dass
- die zusätzlichen Versteifungsmittel umfassen:
- einen zweiten Aufbau (19) von dreieckiger Form, der auf der im Wesentlichen horizontalen Fläche (16b) des Stützelements (16) und zwischen den beiden Querrippen (18) des Stützelements (16) angeordnet ist.

2. Struktur (10) nach dem vorhergehenden Anspruch, **dadurch gekennzeichnet, dass** das Stützelement (16) auf seiner im Wesentlichen vertikalen Fläche (16a) einen vorderen Randabschnitt (20) umfasst, der geeignet ist, einen Schweißpunkt aufzunehmen.

3. Struktur (10) nach einem der vorhergehenden Ansprüche, **dadurch gekennzeichnet, dass** das Stützelement (16) metallisch ist.

4. Struktur (10) nach einem der vorhergehenden Ansprüche, **dadurch gekennzeichnet, dass** das Stützelement (16) eine Dicke (e) von ungefähr 0,75 mm aufweist.

5. Kraftfahrzeug, umfassend mindestens einen vorderen Kotflügel (12), **dadurch gekennzeichnet, dass** es eine Aufbaustruktur (10) für jeden vorderen Kotflügel (12) nach einem der vorhergehenden Ansprüche umfasst.

## Claims

1. Structure (10) for fastening a front wing (12) of a motor vehicle, comprising rigid bodywork elements to which said front wing (12) is fastened, said bodywork elements comprising:
- a reinforcement (13) extending towards the front of the vehicle and comprising an upper edge (13a) extending substantially parallel to an upper edge (12a) of the front wing (12), which upper edge (12a) is prolonged downwardly by a border (12b), with the result that the upper part of the front wing (12) has a substantially U-shaped cross section, said border (12b) being spaced from the upper edge (13a) of the reinforcement (13),
- a support element (16), closing the space thus defined, fastened to the border (12b) of the front wing (12) by a substantially vertical first face (16a), and to said upper edge (13a) of the reinforcement (13) by a substantially horizontal second face (16b), with the result that the support element (16) has an L-shaped cross section, said support element (16) comprising stiffening means (7, 8) ensuring the stiffness of the front wing and additional stiffening means (17, 18, 19) arranged on said substantially horizontal face (16b) of the support element (16) so as to transversely stiffen the front wing (12) without preventing the deformation thereof in the event of a "pedestrian impact"-type impact,
said additional stiffening means of the support element (16) comprise:
- a first shaping (17) arranged at the junction (16c) between said substantially vertical face (16a) and said substantially horizontal face (16b),
- two transverse ribs (18) arranged over the whole width of said substantially horizontal face (16b) of the support element (16) and in a substantially central region of the support element (16),
which structure (10) is **characterized in that** the first shaping (17) is arranged in a substantially front region of the support element, and **in that** said additional stiffening means comprise
- a second shaping (19) of triangular shape arranged on said substantially horizontal face (16b) of the support element (16) and between said two transverse ribs (18) of the support element (16).

2. Structure (10) according to the preceding claim, **characterized in that** the support element (16) comprises a front edge portion (20) on its substantially vertical face (16a) that is able to receive a spot weld.

3. Structure (10) according to any one of the preceding claims, **characterized in that** the support element (16) is metallic.

4. Structure (10) according to any one of the preceding claims, **characterized in that** the support element (16) has a thickness (e) of the order of 0.75 mm.

5. Motor vehicle comprising at least one front wing (12), **characterized in that** it comprises a structure (10) for fastening each front wing (12) according to any one of the preceding claims.
